# EUROPÄISCHE PATENTSCHRIFT

(11) **EP 2 215 462 B1**
(45) Veröffentlichungstag und Bekanntmachung des Hinweises auf die Patenterteilung: **09.11.2011**
(21) Anmeldenummer: 08855855.6
(22) Anmeldetag: 24.11.2008
(51) Int. Cl.: G01N 25/72, F03D 11/00

(54) **VERFAHREN ZUM PRÜFEN EINES ROTORBLATTS EINER WINDKRAFTANLAGE UND PRÜFVORRICHTUNG**
METHOD FOR TESTING A ROTOR BLADE OF A WIND POWER PLANT AND TEST DEVICE
PROCÉDÉ D'ESSAI D'UNE PALE DE ROTOR D'UNE ÉOLIENNE ET DISPOSITIF D'ESSAI

(30) Priorität: 07.12.2007 DE 102007059502
(43) Veröffentlichungstag der Anmeldung: 11.08.2010
(73) Patentinhaber: Fraunhofer-Gesellschaft zur Förderung der angewandten Forschung e.V., 80686 München (DE)
(72) Erfinder: ADERHOLD, Jochen, 30419 Hannover (DE)
(74) Vertreter: Plöger, Jan Manfred
(86) Internationale Anmeldenummer: PCT/DE2008/001975
(87) Internationale Veröffentlichungsnummer: WO 2009/071056

(56) Entgegenhaltungen:
- EP-A- 0 394 932
- WO-A-03/069324
- MEINLSCHMIDT, P; ADERHOLD, J.: "Thermographic inspection of rotor blades" NDT.NET, [Online] Bd. 11, Nr. 11, 26. September 2006 (2006-09-26), XP002525987 ECNDT 2006 ISSN: 1435-4934 Gefunden im Internet: URL:http://www.ndt.net/article/ecndt2006/d oc/Tu.1.5.3.pdf> [gefunden am 2009-04-29]
- BAUER, N.; ADERHOLD, J.: "Wärmefluss-Thermographie entdeckt unsichtbare Fehlstellen" WERKSTATTSTECHNIK ONLINE, Bd. 9/2004, September 2004 (2004-09), Seiten 469-471, XP002525988

## Beschreibung

Die Erfindung betrifft ein Verfahren zum Prüfen eines Rotorblattes einer Windkraftanlage, das bei Betrieb der Windkraftanlage eine Rotorblattstreichfläche überstreicht und eine Prüfvorrichtung zur Durchführung des Verfahrens. Gemäß einem zweiten Aspekt betrifft die Erfindung eine Prüfvorrichtung für Windkraftanlagen.

Rotorblätter von Windenergieanlagen sind hoch belastete Bauteile und müssen regelmäßig auf strukturelle Fehler überprüft werden. Eine derartige Prüfung ist bei an einer Windenergieanlage montierten Rotorblättern zeitaufwändig und kostspielig, da sie schwer zugänglich sind. Dies gilt insbesondere für Windenergieanlagen auf dem offenen Meer.

Die US 4,854,724 A offenbart ein Verfahren zur zerstörungsfreien Untersuchung von Schweißnähten und Schweißpunkten. Dabei wird ein Thermografieverfahren angewendet, bei dem der zu untersuchende Schweißpunkt oder die Schweißnaht und deren Umgebung erwärmt wird und der Temperaturverlauf und das Abkühlverhalten über eine Wärmebildkamera verfolgt wird. Nachteilig ist, dass das Verfahren nicht angewendet werden kann, wenn sich das Objekt bewegt. Um damit Rotorblätter zu überprüfen, müssten die betreffenden Windkraftanlagen folglich stillgelegt werden.

Die US 6,419,387 B1 offenbart ebenfalls ein Thermografieverfahren, bei dem kleine Teile der Oberfläche eines Werkstückes, das zu untersuchen ist, erwärmt werden und anschließend der Temperaturverlauf und das Abkühlverhalten beobachtet wird. Die US 6,419,387 B1 schlägt ein Rasterverfahren vor, mit dem auch großflächigere Bauteile schnell und kostengünstig untersucht werden können. Auch dies ist nachteiligerweise nicht beim Betrieb einer Windkraftanlage möglich. Gleiches gilt für die WO 2006/074 938 A1, die ebenfalls ein thermografisches Verfahren zur Untersuchung eines Bauteiles auf strukturelle Schädigungen offenbart. Auch dieses Verfahren kann im laufenden Betrieb einer Windkraftanlage nicht durchgeführt werden.

Die WO 03/069324 A1 offenbart ein Verfahren, mit dem auf thermografischer Basis untersucht werden kann, ob Klebstoff, der sich beim Aushärten erwärmt, an allen vorgesehenen Stellen vorhanden ist. Das in der WO 03/069324 A1 beschriebene Verfahren dient ausschließlich der Kontrolle im Produktionsprozess und kann somit ebenfalls nicht angewendet werden, wenn sich ein Rotorblatt im Betrieb der Windkraftanlage dreht.

Die Prüfung von Rotorblältun mit Thermographie ist außerdem bekannt aus den Artikeln "Thermographic inspection of rotor blades" von P.MEINLSCHMIDT et al., E-Joumal of nondestructive testing and ultrasonics, vol. 11, p.1-9 (2006) und "Wärmefluss-Thermographie entdeckt unsichtbare Fehlstellen" von N. BANER et al., Werkstaltstechnik online 94 (2004), Nr. 9, p. 469-471.

Der Erfindung liegt die Aufgabe zugrunde, ein Verfahren zum Prüfen eines Rotorblattes einer Windkraftanlage bereitzustellen, mit dem Nachteile im Stand der Technik verringert werden können. Zudem soll eine Prüfvorrichtung bereitgestellt werden, mit der das Verfahren durchgeführt werden kann:

Die Erfindung löst die Aufgabe durch ein Verfahren mit folgenden Schritten
a) Aussenden eines Ziellichtstrahls, insbesondere eines Ziellaserstrahls, der eine Ziellichtstrahl-Leistungsdichte besitzt, in eine Ziellichtstrahlrichtung auf die Rotorblattüberstreichfläche;
b) Erfassen einer etwaigen Reflexion des Ziellichtstrahls an einer Auftreffstelle am Rotorblatt durch eine Erfassungsvorrichtung
c) unmittelbar nach dem Erfassen der Reflexion elektrisch gesteuertes Aussenden eines Messlaserstrahls mit einer Messlaserstrahl-Leistungsdichte, die größer ist als die Ziellichtstrahl-Leistungsdichte, auf die Auftreffstelle, so dass sich das Rotorblatt an der Auftreffstelle erwärmt;
d) Vermessen einer Temperaturänderung an der Auftreffstelle und
e) Wiederholen der Schritte a) bis d) für mehrere Auftreffstellen.

Vor dem Aussenden eines Ziellichtstrahls im Verfahrensschritt a) wird die Ziellichtquelle auf die Rotorblattüberstreichfläche ausgerichtet. Der anschließend ausgesandte Ziellichtstrahl trifft entweder auf ein Rotorblatt und wird zumindest teilweise reflektiert und zurückgeworfen oder geht zwischen zwei Rotorblättern hindurch. Damit der Ziellichtstrahl in letzterem Fall auf seinem weiteren Weg keinen Schaden anrichtet, weist der Ziellichtstrahl eine relativ geringe Ziellichtstrahl-Leistungsdichte auf, die beispielsweise weniger als 1 mW/mm², bevorzugt weniger als 0.1 mW/mm² beträgt.

Der nach der Reflexion des Ziellichtstrahls auf einem Rotorblatt zurückgeworfene Anteil des Lichts des Ziellichtstrahls wird im Verfahrensschritt b) erfasst. Unmittelbar nach dem Erfassen des vom Rotorblatt zurückgeworfenen Lichts des Ziellichtstrahls wird der Messlaserstrahl ausgesendet. Zwischen dem Erfassen des reflektierten Lichts des Ziellichtstrahls und dem Aussenden des Messlaserstrahls liegen vorteilhafterweise weniger als 10 ms, besonders vorzugsweise weniger als 5 ms. So ist sichergestellt, dass die Prüfung möglichst schnell durchgeführt wird. Zudem ist durch diesen geringen Zeitabstand gewährleistet, dass der Ziellaserstrahl und der Messlaserstrahl das Rotorblatt an der gleichen Stelle treffen, obwohl das Rotorblatt auch bei Stillstand der Windkraftanlage, beispielsweise durch Wind, in kleine Bewegung, beispielsweise Vibrationen, versetzt werden kann.

Der Messlaserstrahl weist eine Messlaserstrahl-Energiedichte auf, die größer ist als die Ziellichtstrahl-Energiedichte, und beispielsweise mehr als 50 mW/mm² beträgt. Dadurch ist gewährleistet, dass der Messlaserstrahl auf das Rotorblatt, das zu prüfen ist, auftrifft.

Der Messlaserstrahl trifft auf das zu prüfende Rotorblatt. Dadurch erwärmt sich das Rotorblatt an der Auftreffstelle. Nach einer gewissen Zeitspanne, die beispielsweise 10 s beträgt, wird der Messlaserstrahl ausgeschaltet. Damit wird die Erwärmung des Rotorblatts an der Auftreffstelle gestoppt. Im nächsten Verfahrensschritt wird die Temperaturverteilung an der Oberfläche des Rotorblatts in der Auftreffstelle des Messlaserstrahls und um diese herum vermessen. Details über die Vermessung und die Auswertung der erhaltenen Daten werden weiter unten beschrieben. Nachdem die Temperaturverteilung vermessen ist, werden die Verfahrensschritte a) bis d) an einer anderen Auftreffstelle des Rotorblatts wiederholt. So kann das Rotorblatt über einen weiten räumlichen Bereich geprüft werden.

Vorteilhafterweise wird eine räumliche Temperaturverteilung gemessen. Nach dem Ausschalten des Messlaserstrahls wird die Temperaturverteilung an der Rotorblattoberfläche ortsaufgelöst über einen Bereich vermessen, dessen Durchmesser beispielsweise dem Fünffachen des Durchmessers entspricht, den der Messlaserstrahl an der Auftreffstelle hatte.

Vorteilhafterweise wird zumindest auch eine zeitliche Temperaturverteilung gemessen. In diesem Fall wird nach dem Abschalten des Messlaserstrahls die Temperaturverteilung an der Oberfläche des Rotorblatts, das zu prüfen ist, ortsaufgelöst zu verschiedenen Zeiten gemessen.

Vorteilhafterweise werden aus den räumlichen und/oder zeitlichen Temperaturverteilungen Inhomogenitäten ermittelt und, wenn ein vorgegebener Schwellenwert für die Inhomogenität überschritten wird, ein Signal ausgegeben. Nach dem Ausschalten des Messlaserstrahls wird die durch den Messlaserstrahl der Rotorblattoberfläche zugeführte Energie in das Material des Rotorblatts hinein abgeführt. Dadurch sinkt die Temperatur an der Oberfläche des Rotorblatts. Die Geschwindigkeit, mit der die durch den Messlaserstrahl zugeführte Wärmeenergie abgeführt wird, und damit auch die Geschwindigkeit, mit der die Temperatur an der Rotorblattoberfläche sinkt, hängt ab von der Wärmeleitfähigkeit des Rotorblattmaterials. Ein Rotorblatt, das aus einem homogenen Material besteht, besitzt auch eine homogene Wärmeleitfähigkeit. Dies bedeutet, dass der Transport der zugeführten Wärme in alle Richtungen gleich schnell abläuft, so dass die Temperatur ebenfalls an allen Stellen mit der gleichen Charakteristik sinkt.

Der Messlaserstrahl trifft das zu prüfende Rotorblatt an einer Auftreffstelle. An dieser Stelle weist der Messlaserstrahl einen im Idealfall kreisförmigen Querschnitt auf, dessen Radius beispielsweise 15 mm beträgt. Innerhalb dieses Querschnitts ist die Messlaserstrahl-Leistungsdichte nicht konstant. Sie nimmt von der Mitte des Querschnitts zum Rand hin ab. Das bedeutet, dass in der Mitte der Auftreffstelle mehr Energie auf das zu prüfende Rotorblatt übertragen wurde. Damit ist auch die Temperaturverteilung an der Rotorblattoberfläche innerhalb der Auftreffstelle nicht konstant. Auch sie fällt vom Mittelpunkt der Auftreffstelle zum Rand hin ab. Dabei ist der Radius des Messlaserstrahl-Querschnittes die Entfernung von der Mitte des Querschnittes, in der die auftreffende Messlaserstrahl-Leistung die Hälfte der in der Mitte des Querschnitts auftreffenden Messlaserstrahl-Leistung beträgt.

Da der Abtransport der durch den Messlaserstrahl zugeführten Wärme und damit das Absinken der Temperatur an der Rotorblattoberfläche bei homogenen Materialien in alle Richtungen gleich schnell verläuft, ist die an einer Position gemessene Temperatur nur abhängig vom Abstand zum Zentrum der Auftreffstelle. Die durch eine Messung der räumlichen Temperaturverteilung an der Oberfläche des Rotorblatts erhaltenen Daten sind bei einem intakten Rotorblatt daher im Wesentlichen rotationssymmetrisch um den Mittelpunkt der Auftreffstelle. Bleibt nun beispielsweise eine Stelle deutlich länger warm als andere Stellen im gleichen Abstand vom Zentrum der Auftreffstelle, kann das beispielsweise durch einen darunter liegenden Lufteinschluss hervorgerufen werden. Dieser hat eine deutlich geringere Wärmeleitfähigkeit als das ihn umgebende Material, so dass hier die Wärmeenergie, die durch den Messlaserstrahl Zugeführt wurde, nicht so schnell in das Material abtransportiert werden kann.

Ein möglicher Messwert, mit dem Inhomogenitäten gemessen werden können, ist die Differenz einer maximalen und einer minimalen Temperatur, die auf einem Ring um das Zentrum der Auftreffstelle herum gemessen wird. Überschreitet diese Differenz einen vorher festgelegten Schwellenwert, wird ein Signal ausgegeben. Dieses wird beispielsweise online oder über Funk an eine Leitstelle oder ein Rechenzentrum abgegeben.

Zur Messung der zeitlichen Temperaturänderung werden mehrere Messergebnisse der räumlichen Temperaturverteilung zu verschiedenen Zeiten durchgeführt. Aus diesen wird die Ableitung der Temperatur an einer bestimmten Stelle nach der Zeit errechnet. Aus dieser kann auf dem Wärmestrom und aus diesem auf die Wärmeleitfähigkeit zurück geschlossen werden. Für ein homogenes Medium ist die Wärmeleitfähigkeit räumlich konstant. Daher hängt die Ableitung der Temperatur an einer Position auf dem Rotorblatt nach der Zeit nur vom Abstand dieser Position vom Mittelpunkt der Auftreffstelle ab. Ist diese Ableitung nun an einer Stelle deutlich geringer als an anderen Stellen, die den gleichen Abstand vom Zentrum der Auftreffstelle aufweisen, deutet das auf einen Lufteinschluss unter der Oberfläche des Rotorblatts hin. Zur Bestimmung von Inhomogenitäten wird beispielsweise die Ableitung der Temperatur nach der Zeit entlang eines Rings, dessen Mittelpunkt der Mittelpunkt der Auftreffstelle ist, ermittelt. Übersteigt die Differenz zwischen dem maximalen Wert und dem minimalen Wert dieser Ableitung einen vorher festgelegten Schwellwert, wird ein Signal ausgesendet.

Vorteilhafterweise wird die Temperaturverteilung mit einer Wärmekamera gemessen. Diese ist so eingestellt, dass sie einen Bereich auf der Rotorblattoberfläche erfasst, in dessen Zentrum die Auftreffstelle des Messlaserstrahls liegt. Der zu vermessene Bereich ist beispielsweise ein Kreis, mit einem Durchmesser, der dem Fünffachen bis Zehnfachen des Durchmessers der Auftreffstelle entspricht.

Vorteilhafterweise wird nach dem Vermessen der Temperaturverteilung die Ziellichtstrahlrichtung verändert. Damit ist gewährleistet, dass im nächsten Verfahrensdurchgang eine andere Auftreffstelle geprüft wird. Dabei ist zu beachten, dass sowohl der Ziel- als auch der Messlaserstrahl dann unter einem anderen Winkel auf das Rotorblatt auftreffen. Insbesondere der Ziellichtstrahl wird folglich unter einem anderen Winkel reflektiert, was die Intensität des nach dem Reflektieren zu erfassenden Lichts deutlich verändern kann. Um dem Rechnung zu tragen, wird die Sensibilität der Erfassung des Ziellichtstrahls nach der Reflexion an einem Rotorblatt erhöht oder gesenkt.

Vorteilhafterweise wird das Verfahren durchgeführt, während die Rotorblätter stillstehen. Dadurch wird eine besonders hohe Messgenauigkeit erreicht.

Vorteilhafterweise besitzt der Messlaserstrahl eine Wellenlänge, die jenseits des menschlichen Sehspektrums liegt. Auf diese Weise ist sichergestellt, dass der Messlaserstrahl keinen bzw. minimalen Schaden anrichtet, wenn er beispielsweise durch eine Fehlfunktion ein Rotorblatt nicht trifft. Aber auch bei der Prüfung von Stellen auf der Rotorblatt-Oberfläche, auf denen der Messlaserstrahl nicht senkrecht auftrifft, kann es zu einer Gefährdung kommen. In diesem Fall wird, wie beim Ziellichtstrahl, ein Anteil des einfallenden Lichts reflektiert. Da der Messlaserstrahl eine, wie oben beschrieben, hohe Messlaserstrahl-Leistungsdichte hat, geht von ihm eine erhebliche Gefahr aus, die durch eine optimale Wahl der Wellenlänge des Messlaserstrahls minimiert werden kann.

Vorzugsweise ist das zu prüfende Rotorblatt an einer Nabe befestigt und der Ziellichtstrahl wird auf Auftreffstellen unterschiedlicher radialer Abstände von der Nabe ausgesendet. Dadurch wird sichergestellt, dass das zu prüfende Rotorblatt umfassend geprüft wird. Wie bereits beschrieben, ist gegebenenfalls die Sensibilität der zur Erfassung des reflektierten Lichts des Ziellichtstrahls verwendeten Vorrichtung an einen gegebenenfalls veränderten Auftreff- und damit Reflexionswinkel des Lichts anzupassen.

Vorzugsweise werden der Messlaserstrahl und der Ziellichtstrahl auf einem gemeinsamen Strahlengang ausgesendet. Damit ist sichergestellt, dass ein ausgesendeter Messlaserstrahl ein Rotorblatt trifft, da offensichtlich auch der Ziellichtstrahl reflektiert wurde.

Vorzugsweise werden der Ziellichtstrahl und der Messlaserstrahl von einer Messvorrichtung ausgesandt, die auf einer zweiten Windkraftanlage montiert ist. In diesem Fall trifft der Ziellichtstrahl zumindest in der näheren Umgebung der Nabe, an der das zu prüfende Rotorblatt befestigt ist, im Wesentlichen senkrecht auf das Rotorblatt, so dass die maximale Intensität des Ziellichtstrahls reflektiert werden kann. Zudem ist sichergestellt, dass sich insbesondere der Messlaserstrahl nicht auf Augenhöhe eventueller Passanten oder Tiere befindet, wo er Schaden anrichten könnte.

Eine erfindungsgemäße Prüfvorrichtung für Windkraftanlagen umfasst eine Ziellichtquelle, die eine Ziellichtstrahl-Leistungsdichte besitzt, eine Erfassungsvorrichtung, die zum Erfassen einer etwaigen Reflexion des Ziellichtstrahls an einem Rotorblatt der Windkraftanlage ausgebildet ist, einen Messlaser, der eine Messlaser-Leistungsdichte besitzt, die größer ist als die Ziellichtstrahl-Leistungsdichte und der ausgebildet ist, zum Abgeben eines Messlaserstrahls in eine Messiaserstrahlrichtung sowie eine Temperaturmessvorrichtung zum Vermessen der Temperaturverteilung an der Auftreffstelle sowie eine elektrische Steuerung, die mit der Ziellichtquelle, der Erfassungsvorrichtung, dem Messlaser und der Temperaturmessvorrichtung verbunden und eingerichtet ist zum Durchführen eines der oben genannten Verfahren.

Als Ziel- und Messlaser eignen sich insbesondere Diodenlaser sowie Festkörperlaser. Aber auch andere Lasertypen sind vorstellbar. Die Ziellichtstrahl-Leistungsdichte beträgt beispielsweise weniger als 1 mW/mm², vorteilhafterweise weniger als 0.1 mW/mm². Der Messlaserstrahl hingegen weist eine Messlaserstrahl-Leistungsdichte auf, die beispielsweise 50 mW/mm² beträgt. Durch die elektrische Steuerung ist sichergestellt, dass das Verfahren automatisiert durchgeführt werden kann. Eine voreingestellte Routine, die die gesamte Oberfläche der Rotorblätter durch geschickte Wahl der Auftreffstellen abscannt, ist so einfach zu realisieren, was den Personalaufwand und damit die notwenigen Kosten deutlich reduziert.

Vorteilhafterweise ist die Ziellichtquelle in der Ziellichtstrahlrichtung und der Messlaser in der Messlaserstrahlrichtung motorbetrieben verstellbar. Dadurch wird die Richtung deutlich genauer einstellbar, als wenn die Laser per Hand justiert werden müssten und zudem ist erhöht dies die Reproduzierbarkeit. So kann beispielsweise eine Stelle auf einem Rotorblatt, bei der die erfassten Daten fehlerhaft sind oder bei der die erfassten Daten einer Überprüfung bedürfen, einfach und genau erneut eingestellt werden.

Vorteilhafterweise ist in einem Windpark mit zwei Windkraftanlagen zumindest auf einer der Windkraftanlagen einer der beschriebenen Prüfvorrichtungen befestigt, die eingerichtet sind ein oben beschriebenes Verfahren durchzuführen. Dies ist insbesondere für Windparks auf hoher See von Vorteil, da diese nur schwer zugänglich sind, so dass die Prüfung von Rotorblättern dieser Windkraftanlagen aufwendig und kostenintensiv ist. Zudem ist eine Überprüfung der Rotorblätter von Windkraftanlagen auf hoher See deutlich häufiger nötig, da diese durch extremere Wetterbedingungen und den ständigen Einfluss von Salz deutlich schneller verschleißen.

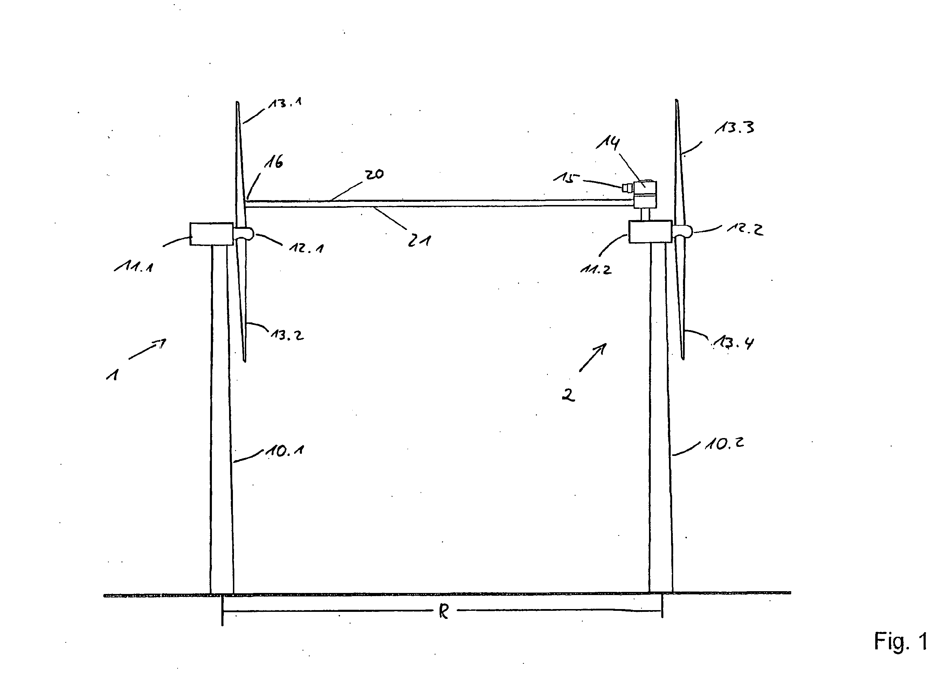

Mit Hilfe einer Zeichnung wird nachfolgend ein Ausführungsbeispiel der Erfindung näher beschrieben. Es zeigt
- Figur 1: zwei Windenergieanlagen, von denen eine mit einer erfindungsgemäßen Prüfvorrichtung zur Durchführung eines erfindungsgemäßen Verfahrens ausgestattet ist.

Figur 1 zeigt eine erste Windkraftanlage 1 und eine zweite Windkraftanlage 2, mit je einem Turm 10.1 und 10.2, und je einer Gondel 11.1 und 11.2. Die Gondeln 11.1 und 11.2 tragen je eine Nabe 12.1 und 12.2, um die sich die daran befestigten Rotorblätter 13.1, 13.2, 13.3 und 13.4 drehen. Die beiden Windkraftanlagen 1 und 2 stehen in einem Abstand R. Der Abstand R beträgt in der Regel zwischen 200 und 900 Metern. Auf der Gondel 11.2 der zweiten Windkraftanlage 2 ist eine erfindungsgemäße Prüfvorrichtung 14 befestigt, die über einen Ziellaser, eine Erfassungsvorrichtung, einen Ziellaser und eine Temperaturmessvorrichtung 15 verfügt. Von diesen Bestandteilen der Prüfvorrichtung 14 ist nur die Temperaturmessvorrichtung 15 in Figur 1 gezeigt.

Zu Beginn des Verfahrens zur Prüfung des Rotorblattes 13.1 auf strukturelle Fehler wird von der Prüfvorrichtung 14 mittels des darin enthaltenen Ziellasers ein Ziellaserstrahl 20 in Richtung der von den Rotorblättern 13.1 und 13.2 der Windkraftanlage 1 überstrichenen Fläche abgesandt. Der Ziellaserstrahl trifft dabei auf die Auftrefffläche 16 auf dem Rotorblatt 13.1 der Windkraftanlage 1. Dort wird zumindest ein Teil des Lichtes reflektiert und in Richtung der Prüfvorrichtung 14 auf der Gondel 11.2 der Windkraftanlage 2 zurückgeworfen. Über die in der Prüfvorrichtung 14 enthaltene Erfassungsvorrichtung wird dieser zurückgeworfene Anteil des Ziellaserstrahls 20 erfasst. Hierzu ist es nicht notwendig, dass zu Beginn ein Laserstrahl ausgesendet wurde, prinzipiell ist jedes Verfahren, mit dem die Position der auszumessenden Rotorblätter festgestellt werden kann, geeignet. Durch die Verwendung der Kombination Ziellaserstrahl 20 und Messlaserstrahl 21, die vorzugsweise in einem Strahlengang ausgesendet werden, ist jedoch eine erhöhte Genauigkeit und Reproduzierbarkeit gewährleistet. Hat die in der Prüfvorrichtung 14 enthaltene Erfassungsvorrichtung eine Reflexion des Ziellaserstrahls 20 auf der Auftrefffläche 16 auf dem Rotorblatt 13.1 festgestellt, wird ein Messlaserstrahl 21 emittiert. In Figur 1 sind Ziellaserstrahl 20 und Messlaserstrahl 21 leicht versetzt dargestellt. Dies ist möglich, vorteilhafterweise werden sie jedoch in einem Strahlengang ausgesandt.

Der Messlaserstrahl 21 trifft das Rotorblatt 13.1 an der Auftreffstelle 16. Durch die hohe Leistungsdichte des Messlaserstrahls 21 wird die Temperatur des Rotorblattes 13.1 an der Auftreffstelle 16 erhöht und die dort entstehende Wärme in das Material des Rotorblattes 13.1 abgeleitet. Die Geschwindigkeit, mit der dies passiert, und die räumliche Ausdehnung, die erreicht wird, hängen von der Wärmeleitfähigkeit des Materials des Rotorblattes 13.1 ab. Diese wird durch strukturelle Fehler, wie beispielsweise Risse, oder Lufteinschlüsse, verändert, so dass ein anderes Temperaturprofil festgestellt wird, wenn die Auftreffstelle strukturelle Fehler aufweist. Über die Temperaturmessvorrichtung 15, die beispielsweise eine Thermokamera sein kann, die in der Prüfvorrichtung 14 integriert ist, wird die Temperaturverteilung an der Auftreffstelle 16 auf dem Rotorblatt 13.1 gemessen. Dabei kann eine räumliche Verteilung der Wärmeenergie als auch der zeitliche Verlauf des Wärmetransports gemessen werden. Aus dem Vergleich der derart ermittelten Daten mit den bekannten Daten eines intakten Rotorblattes können Inhomogenitäten und strukturelle Fehler aufgedeckt werden.

Da das Verfahren über eine relativ große Distanz R durchführbar ist, kann eine geeignete Prüfvorrichtung auch auf dem Fußboden oder beispielsweise mobil in einem Auto montiert sein. Dadurch wird das Verfahren flexibel einsetzbar und es muss nicht für jede Windkraftanlage eine eigene Prüfvorrichtung angeschafft werden, was die Kosten des Wartungsverfahrens deutlich senkt.

### Bezugszeichenliste

- 1: erste Windkraftanlage
- 2: zweite Windkraftanlage
- 10: Turm einer Windkraftanlage
- 11: Gondel
- 12: Nabe
- 13: Rotorblatt
- 14: Prüfvorrichtung
- 15: Temperaturmessvorrichtung
- 16: Auftrefffläche
- 20: Ziellaserstrahl
- 21: Messlaserstrahl

## Patentansprüche

1. Verfahren zum Prüfen eines Rotorblatts (13) einer Windkraftanlage, (1) das bei Betrieb der Windkraftanlage (1) eine Rotorblattüberstreichfläche überstreicht, mit den Schritten:
(a) Aussenden eines Ziellichtstrahls (20), insbesondere eines Ziellichtstrahls (20), der eine Ziellichtstrahl-Leistungsdichte besitzt, in eine Ziellichtstrahlrichtung auf die Rotorblattüberstreichfläche,
(b) Erfassen einer etwaigen Reflexion des Ziellichtstrahls (20) an einer Auftreffstelle (16) am Rotorblatt durch eine Erfassungsvorrichtung,
(c) unmittelbar nach dem Erfassen der Reflexion elektrisch gesteuertes Aussenden eines Messlaserstrahls (21) mit einer Messlaserstrahl-Leistungsdichte, die größer ist als die Ziellichtstrahl-Leistungsdichte, auf die Auftreffsteile (16), so dass sich das Rotorblatt (13) an der Auftreffstelle erwärmt,
(d) Vermessen einer Temperaturverteilung an der Auftreffstelle (16) und
(e) Wiederholen der Schritte (a) bis (d) für mehrere Auftreffstellen (16).

2. Verfahren nach Anspruch 1, **dadurch gekennzeichnet, dass** eine räumliche Temperaturverteilung vermessen wird.

3. Verfahren nach einem der vorstehenden Ansprüche, **dadurch gekennzeichnet, dass** eine Temperaturverteilung zu mindestens zwei verschiedenen Zeiten vermessen wird.

4. Verfahren nach einem der Ansprüche 2 oder 3, **dadurch gekennzeichnet, dass** die Temperaturverteilung mit einer Thermokamera (15) gemessen wird.

5. Verfahren nach einem der Ansprüche 2 bis 4, **gekennzeichnet durch** die Schritte:
- Ermitteln von Inhomogenitäten aus der räumlichen und/oder zeitlichen Temperaturverteilung und
- Ausgeben eines Signals, wenn ein vorgegebener Schwellenwert für mindestens eine der Inhomogenitäten überschritten wird.

6. Verfahren nach einem der vorstehenden Ansprüche, **gekennzeichnet durch** den Schritt:
- nach dem Vermessen der Temperaturverteilung Verändern der Ziellichtstrahlrichtung.

7. Verfahren nach einem der vorstehenden Ansprüche, **dadurch gekennzeichnet, dass** es durchgeführt wird, während die Rotorblätter (13) stillstehen.

8. Verfahren nach einem der vorstehenden Ansprüche, **dadurch gekennzeichnet, dass** der Messlaserstrahl (21) eine Wellenlänge besitzt, die jenseits des menschlichen Sehspektrums liegt.

9. Verfahren nach einem der vorstehenden Ansprüche, **dadurch gekennzeichnet, dass**
- das Rotorblatt (13) an einer Nabe (12) befestigt ist und der Ziellichtstrahl (20) auf Auftreffstellen (16) unterschiedlicher radialer Abstände von der Nabe (12) ausgesendet wird.

10. Verfahren nach einem der vorstehenden Ansprüche, d**adurch gekennzeichnet, dass** der Messtaserstrahl (21) und der Ziellichtstrahl (20) auf einem gemeinsamen Strahlengang ausgesandt werden.

11. Verfahren nach einem der vorstehenden Ansprüche, **dadurch gekennzeichnet, dass** der Ziellichtstrahl (20) und der Messlaserstrahl (21) von einer Messvorrichtung (14) ausgesandt werden, die auf einer zweiten Windkraftanlage (2) montiert ist.

12. Prüfvorrichtung für Windkraftanlagen, mit:
(a) einer Ziellichtquelle, die eine Ziellichtstrahl-Leistungsdichte besitzt,
(b) einer Erfassungsvorrichtung, die zum Erfassen einer etwaigen Reflexion des Ziellichtstrahls (20) an einer Auftreffstelle (16) an einem Rotorblatt (13) der Windkraftanlage (1) ausgebildet ist,
(c) einem Messlaser, der eine Messlaser-Leistungsdichte besitzt, die größer ist als die Ziellichtstrahl-Leistungsdichte, und ausgebildet ist zum Abgeben eines Messiaserstrahls (21) in eine Messlaserstrahlrichtung,
(d) einer Temperaturmessvorrichtung zum Vermessen einer Temperaturverteilung an der Auftreffstelle (16), und
(e) einer elektrischen Steuerung, die mit der Ziellichtquelle, der Erfassungsvorrichtung, dem Messlaser und der Temperaturmessvorrichtung verbunden ist und eingerichtet ist zum Durchführen eines Verfahrens nach einem der Ansprüche 1 bis 11.

13. Prüfvorrichtung nach Anspruch 12, **dadurch gekennzeichnet, dass** der Ziellichtstrahl (20) in seiner Ziellichtstrahlrichtung und der Messlaser (21) in seiner Messlaserstrahlrichtung motorbetrieben verstellbar sind.

14. Windpark mit mindestens zwei Windkraftanlagen (1,2), **dadurch gekennzeichnet, dass** auf einer der Windkraftantagen (2) eine Prüfvorrichtung (14) nach Anspruch 12 befestigt ist, die eingerichtet ist zum Durchführen eines Verfahrens nach einem der Ansprüche 1 bis 11 an einem Rotorblatt (13) einer anderen Windkraftanlage (1).

## Claims

1. A method for testing a rotor blade (13) of a wind power installation (1), which covers a rotor blade coverage area during operation of the wind power installation (1), having the following steps:
(a) transmission of an aiming light beam (20), in particular of an aiming light beam (20) which has an aiming light beam power density, in an aiming light beam direction at the rotor blade coverage area,
(b) detection of any reflection of the aiming light beam (20) on an impact point (16) on the rotor blade by a detection apparatus,
(c) directly after the detection of the reflection, electrically controlled transmission of a measurement laser beam (21) with a measurement laser beam power density which is greater than the aiming light beam power density, at the impact point (16), such that the rotor blade (13) is heated at the impact point (16),
(d) measurement of a temperature distribution at the impact point (16), and
(e) repetition of steps (a) to (d) for a plurality of impact points (16).

2. The method as claimed in claim 1, **characterized in that** a spatial temperature distribution is measured.

3. The method as claimed in one of the preceding claims, **characterized in that** a temperature distribution is measured at at least two different times.

4. The method as claimed in one of claims 2 or 3, **characterized in that** the temperature distribution is measured using a thermal imaging camera (15).

5. The method as claimed in one of claims 2 to 4, **characterized by** the following steps:
- determination of inhomogeneities from the spatial and/or time temperature distribution, and
- outputting of a signal when a predetermined threshold value for at least one of the inhomogeneities is exceeded.

6. The method as claimed in one of the preceding claims, **characterized by** the following step:
- after the measurement of the temperature distribution, variation of the aiming light beam direction.

7. The method as claimed in one of the preceding claims, **characterized in that** the method is carried out while the rotor blades are stationary.

8. The method as claimed in one of the preceding claims, **characterized in that** the measurement laser beam (21) is at a wavelength which is beyond the human visible spectrum.

9. The method as claimed in one of the preceding claims, **characterized in that**
- the rotor blade (13) is attached to a hub (12), and the aiming light beam (20) is transmitted to impact points (16) at different radial distances from the hub (12).

10. The method as claimed in one of the preceding claims, **characterized in that** the measurement laser beam (21) and the aiming light beam (20) are transmitted on a common beam path.

11. The method as claimed in one of the preceding claims, **characterized in that** the aiming light beam (20) and the measurement laser beam (21) are transmitted from a measurement apparatus (14) which is mounted on a second wind power installation (2).

12. A test apparatus for wind power installations having:
(a) an aiming light source which has an aiming light beam power density,
(b) a detection apparatus, which is designed to detect any reflection of the aiming light beam (20) at an impact point (16) on a rotor blade (13) of the wind power installation (1),
(c) a measurement laser, which has a measurement laser power density which is greater than the aiming light beam power density, and is designed to output a measurement laser beam (21) in a measurement laser beam direction,
(d) a temperature measurement apparatus for measuring a temperature distribution at the impact point (16), and
(e) an electrical controller, which is connected to the aiming light source, to the detection apparatus, to the measurement laser and to the temperature measurement apparatus, and is designed to carry out a method as claimed in one of claims 1 to 11.

13. The test apparatus as claimed in claim 12, **characterized in that** the aiming light beam direction of the aiming light beam (20) can be adjusted, and the measurement laser beam direction of the measurement laser (21) can be adjusted, in a motorized manner.

14. A wind farm having at least two wind power installations (1, 2), **characterized in that** a test apparatus (14) as claimed in claim 12 is mounted on one of the wind power installations (2) and is designed to carry out a method as claimed in one of claims 1 to 11 on a rotor blade (13) of another wind power installation (1).

## Revendications

1. Procédé pour contrôler une pale de rotor (13) d'une génératrice éolienne (1) qui, pendant le fonctionnement de la génératrice éolienne (1), balaye une surface de balayage de la pale de rotor, comprenant les étapes suivantes :
(a) émission d'un rayon lumineux cible (20), en particulier d'un rayon lumineux (20) qui possède une densité de puissance de rayon lumineux, dans une direction de rayon lumineux vers la surface de balayage de la pale de rotor,
(b) détection d'une réflexion éventuelle du rayon lumineux (30) sur un emplacement d'incidence (16) sur la pale de rotor, par un dispositif de détection,
(c) immédiatement après la détection de la réflexion, émission, sous commande électrique, d'un rayon laser de mesure (21) avec une densité de puissance de rayon laser supérieure à la densité de puissance du rayon lumineux, vers l'emplacement d'incidence (16), de sorte que la pale de rotor (13) s'échauffe au niveau de l'emplacement d'incidence,
(d) mesure d'une répartition de température au niveau de l'emplacement d'incidence (16), et
(e) répétition des étapes (a) à (d) pour plusieurs emplacements d'incidence (16).

2. Procédé selon la revendication 1, **caractérisé en ce que** l'on mesure une répartition de température dans l'espace.

3. Procédé selon l'une des revendications précédentes, **caractérisé en ce que** l'on mesure une répartition de température à au moins deux instants différents.

4. Procédé selon l'une des revendications 2 ou 3, **caractérisé en ce que** la répartition de température est mesurée avec une thermo-caméra (15).

5. Procédé selon l'une des revendications 2 à 4, **caractérisé par** les étapes consistant à :
- déterminer des défauts d'homogénéité à partir de la répartition de température dans l'espace et/ou dans le temps, et
- délivrance d'un signal lorsqu'on dépasse une valeur seuil prédéterminée pour l'un au moins des défauts d'homogénéité.

6. Procédé selon l'une des revendications précédentes, **caractérisé par** l'étape consistant à :
- modification de la direction du rayon lumineux cible après mesure de la répartition de température.

7. Procédé selon l'une des revendications précédentes, **caractérisé en ce qui** est exécuté pendant que les pales de rotor (13) sont stationnaires.

8. Procédé selon l'une des revendications précédentes, **caractérisé en ce que** le rayon de laser de mesure (21) possède une longueur d'onde qui se trouvé au-delà du spectre humainement visible.

9. Procédé selon l'une des revendications précédentes, **caractérisé en ce que**
- la pale de rotor (13) est fixée à un moyeu (12), et le rayon lumineux cible (20) est émis vers des emplacements d'incidence (16) présentant des distances radiales différentes depuis le moyeu (12).

10. Procédé selon l'une des revendications précédentes, **caractérisé en ce que** le rayon laser de mesure (21) et le rayon lumineux cible (20) sont émis sur un trajet commun.

11. Procédé selon l'une des revendications précédentes, **caractérisé en ce que** le rayon lumineux cible (20) et le rayon laser de mesure (21) sont émis par un dispositif de mesure (14) qui est monté sur une seconde génératrice éolienne (2).

12. Dispositif de contrôle pour génératrice éolienne, comprenant :
(a) une source de lumière cible, qui possède une densité de puissance de rayon lumineux,
(b) un dispositif détecteur, réalisé pour détecter une réflexion éventuelle du rayon lumineux cible (20) sur un emplacement d'incidence (16) sur une pale de rotor (13) de la génératrice éolienne (1),
(c) un laser de mesure, qui possède une densité de puissance de laser de mesure supérieure à la densité de puissance du rayon de lumière, réalisé pour fournir un rayon laser de mesure (21) dans une direction de rayon laser,
(d) un dispositif de mesure de température pour mesurer répartition de température au niveau de l'emplacement d'incidence (16), et
(e) une commande électrique, relié à la source de lumière cible, au dispositif détecteur, au laser de mesure et au dispositif de mesure de température, et conçu pour mettre en oeuvre un procédé selon l'une des revendications 1 à 11.

13. Dispositif de contrôle selon la revendication 12, **caractérisé en ce que** le rayon de lumière cible (20) est réglable quant à sa direction de rayon de lumière, et le laser de mesure (21) est réglable quant à sa direction de rayon laser, sous l'entraînement d'un moteur.

14. Parc éolien comprenant au moins deux génératrices éoliennes (1, 2), **caractérisé en ce que** sur l'une des génératrices éoliennes (2) est fixé un dispositif de contrôle (14) selon la revendication 12, conçu pour mettre en oeuvre un procédé selon l'une des revendications 1 à 11, sur une pale de rotor (13) d'une autre génératrice éolienne (1).
